# EUROPEAN PATENT APPLICATION

(11) **EP 4 299 944 A1**
(43) Date of publication of application: **03.01.2024**
(21) Application number: 22382599.3
(22) Date of filing: 27.06.2022
(51) Int. Cl.: F16F 9/02, A47C 19/04

(54) **IMPROVED SELF-LOCKING GAS SPRING AND ELEVATION SYSTEM WITH THE SAME**

(71) Applicant: Abain Components, S.L., 20305 Irun (Gipuzkoa) (ES)
(72) Inventor: BARANDIARAN SALABERRIA, Javier, Irun (ES)
(74) Representative: Cueto, Sénida

(57) **Abstract**

The invention relates to a locking gas spring (1) and a elevation system (100). The locking gas spring (1) has a piston assembly (4) that separates the interior chambers (2, 3) of the gas spring (1) through which the gas circulates for its expansion or compression, comprising a floating seal (40) between a piston (42) and a lower washer (41), which connects the chambers (2, 3) intermittently by means of a gas passage (20) when the axle (5) is in compression and kept separated in an airtight way when the axle (5) is in expansion. In this way, a gas spring (1) and any system (100) including the gas spring (1) will have the advantage of achieving compression without the need for external activation.

## Description

### Field of the invention

The invention relates to a self-locking gas spring and an elevation system using several gas springs, including the self-locking spring of the invention, to allow and control the folding or displacement of folding or mobile parts in vehicles, furniture elements, or other applications.

### Prior art

In the prior art, there are countless models of gas springs in elevation systems. Normally, gas springs are made up of a body inside which there are two internal gas chambers, separated from each other by a piston or plunger connected to the end of a moveable axle that protrudes from one end of the gas spring. The natural expansive force of the spring tends to produce the displacement of the axle in the axial direction and towards the outside of the gas spring, and for this displacement to occur it is necessary to allow the passage of gas between these internal chambers. In order for this to happen, a gas spring usually includes at least one gas passage area that connects the chambers, either temporarily or permanently.

On the one hand, gas springs in which the internal gas chambers are temporarily connected are known as "external actuation" gas springs. These gas springs usually comprise a piston that can be moved from the outside to cause the opening of the gas passage area and the consequent displacement of the axle, both in the axial expansion direction and in the axial compression direction. One example of this type of gas spring is seen in office chairs.

On the other hand, gas springs or lifters in which the chambers are permanently connected are called "non-locking" gas springs, in which there is no external pressure on a piston to allow expansion or compression of the spring, but rather the spring has the ability to expand at all times, due to the existence of a permanently open gas passage. By means of an external compressive force on the axle, the axle can remain stationary or, if said compressive force exceeds a threshold, move in the compressive direction. One example of this type of spring can be found in the doors of hatchback vehicles, i.e. when the hatchback boot is opened, one or more non-locking gas springs cause the door to rise at a certain speed and keep the boot open.

Currently, these elevation systems comprise the drawback of the regulation of the force of the lifter, i.e., the force that must be overcome by the elevation system so that it expands or compresses. That is to say, generally if you want to reduce the force needed to be applied manually at the starting moment, in other words, if the force of the piston in the expansion is right, it is difficult to carry out the compression easily, requiring a greater effort to carry out the spring compression. This is due to excess in the gas spring force. However, if the necessary manual force in the compression of the spring is reduced, it then has less force to be able to extend the elevation system at the moment of starting.

In conventional elevation systems such as those used in a foldout bed, systems that combine both of the aspects explained are used, that is to say, a gas spring or lifter that requires an external drive mechanism so that the axle moves in the expansive direction or in the compressive direction. In the absence of any external drive mechanism, the gas spring locks itself, with the axle remaining in the intermediate position in which the external actuation has ceased, and it does not leave said intermediate position until a new external actuation occurs. Systems that combine both aspects have the drawback of being complicated and requiring a lot of effort to lower the bed, that is, to compress the gas spring, since at the moment of compression it is necessary to use both hands to perform an external downward force and keep the external drive activated to keep the gas chambers connected.

Occasionally, attempts have been made to solve the problem of adjusting the force of the spring and external drive by means of motorized systems, to try to alleviate the health and safety problems caused to users or workers by the use of these systems. However, some bed manufacturers or even hotel chains try to avoid exposing customers to the power grid during the night, so it has not been an effective method in certain sectors.

For all of the above reasons, an object of the present invention is to propose an improved locking gas spring, and a elevation system using this gas spring, which makes it possible to extend at least one spring through external activation and compress it without external activation gently and easily, simply by means of an axle push, so that the effort of the user or worker is minimized and as a consequence back injuries also, as indicated by occupational safety regulations.

### Brief description of the invention

The object of the invention is a self-locking gas spring comprising a body which comprises an outer tube and an inner tube, between which there is a gas passage that allows the expansion of the gas spring. Inside the tubes, there are two chambers in which gas is stored, and the chambers are separated by a piston assembly. This piston assembly is located around and connected substantially to the far end of an axle, and this axle protrudes towards the exterior of the gas spring and is able to move axially both in the expansive direction towards the exterior of the gas spring and in the compressive direction towards the interior of the gas spring. The piston assembly comprises at least one lower washer; a piston; an airtight seal between the lower washer and the piston on the interior and in contact with the axle; and an upper washer.

The gas spring also comprises a drive mechanism that can be actuated from outside the gas spring to allow the passage of gas between the chambers via at least one gas passage zone between the tubes, by means of the movement of a release pin in the drive mechanism.

The gas spring of the invention is characterized in that the piston assembly comprises a floating seal between the piston and the lower washer on the outside, in contact with the internal tube, which connects the chambers by means of a passage when the axle compresses and keeps them separated hermetically when the axle expands.

As a result of the fact that the piston assembly of the spring comprises a floating seal between the lower washer and the piston on the outside of the piston and in contact with the inner tube, an intermittent connection between the chambers is allowed. In other words, during expansion, the two chambers are sealed by the passage area of the piston assembly and the passage of gas between the tubes is only opened by the external activation of the drive system release pin. However, during the compression of the spring, due to the configuration of the floating seal, there is communication between the chambers due to the movement of the floating seal, which allows the passage of gas through the piston assembly from one chamber to the other without the need for external activation of the drive system release pin.

In this way, as a result of the self-locking gas spring of the invention, a gas spring is provided where external activation or action of the release pin is not necessary to enable the compression of the gas spring, simply an external axial push of the axle.

Another object of the invention is a elevation system for a mobile structure attached to a base structure by means of at least two connecting bars and at least one gas spring, where one of the connecting bars joins a distal end of the mobile structure with a midpoint of the structure base and the other connecting bar joins a midpoint of the mobile structure with the a proximal end of the base structure and where the elevation system gas spring of the invention joins at least one connecting bar to the mobile structure.

The system of the invention comprises a self-locking gas spring, such as the one explained above, connected to the mobile structure by means of the proximal end of the gas spring and at least one connecting bar by the distal end of the spring axle. Additionally, the self-locking gas spring used in the system is attached to the connecting bar via a slot at the end of the spring axle.

In this way, thanks to the use of the self-locking gas spring with slot or slotted section in this system, for example, a foldout bed structure can be made, or a hinge that is easy and smooth to use.

In other words, an elevation system is created, with the advantage that the force of the self-locking gas spring is added to the expansion force of at least one spring, reducing the pull-out or expansion effort that the user must apply, since during expansion, springs do not have enough elevation force on their own to lift a mobile structure. In addition, with the self-locking gas spring, external activation is not necessary to start the compression and, because of the slot, it is possible to reduce the force necessary for the operator to lower or compress the system, since the self-locking gas spring does not exert any resistance at the start of the movement. Additionally, once in the compression phase, that is, once the slot path and the limit angle have been exceeded, where the gas springs have already entered the compression phase, the self-locking gas spring also adds to the compression force, so that the mobile element will descend, reducing the effort to be made by the person operating it.

In conclusion, the self-locking gas spring together with this solution makes it possible to reduce the forces needed in raising and lowering the mobile structure, offering light, easy movements for expansion and compression of the system of the invention.

### Brief description of the figures

The details of the invention can be seen in the accompanying figures, which should not be considered limiting of the scope of the invention:
- Figure 1A is a cross-sectional view of the gas spring of the invention in expansion.
- Figure 1B is a cross-sectional view of the gas spring of the invention in compression.
- Figure 2A is a cross-sectional view of the piston assembly of Figure 1 at the moment of expansion.
- Figure 2B is a cross-sectional view of the piston assembly of Figure 1 at the moment of compression.
- Figure 3A is a side view of the elevation system with the gas spring of Figure 1 at the moment of expansion.
- Figure 3B shows a side view of the elevation system with the gas spring of Figure 1 at the moment of compression.
- Figure 4 shows a side view of one application mode of the system of the invention.

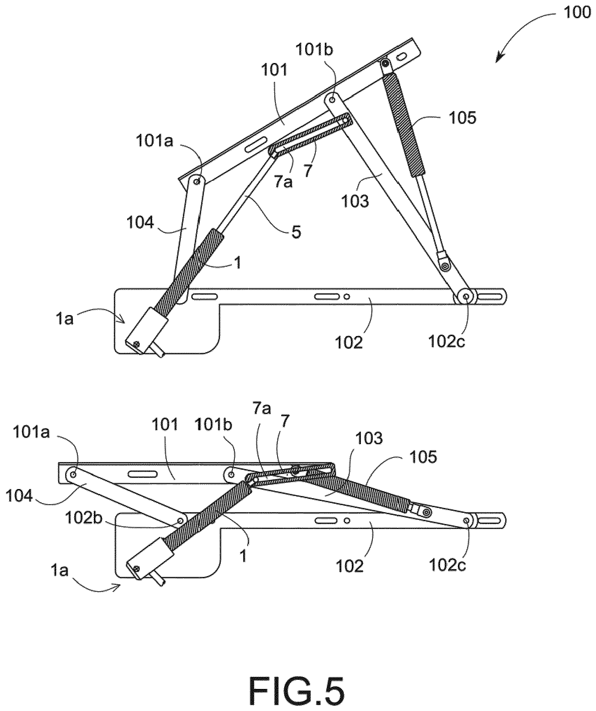

- Figure 5 shows a side view of another application mode of the system of the invention.

### Detailed description of the invention

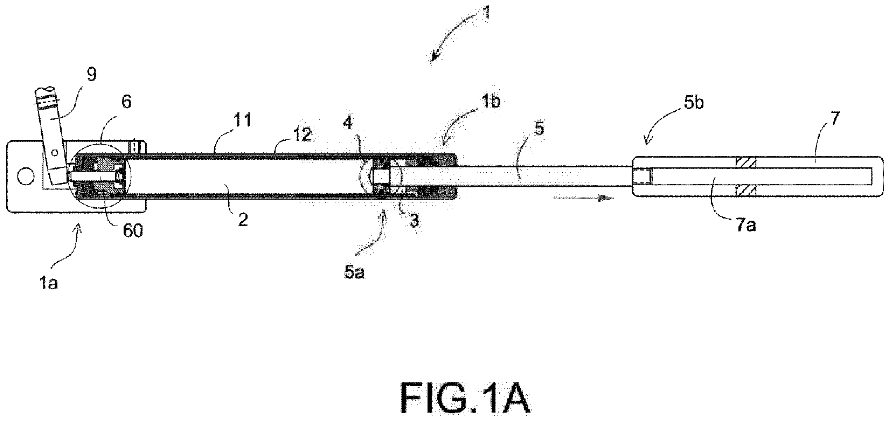

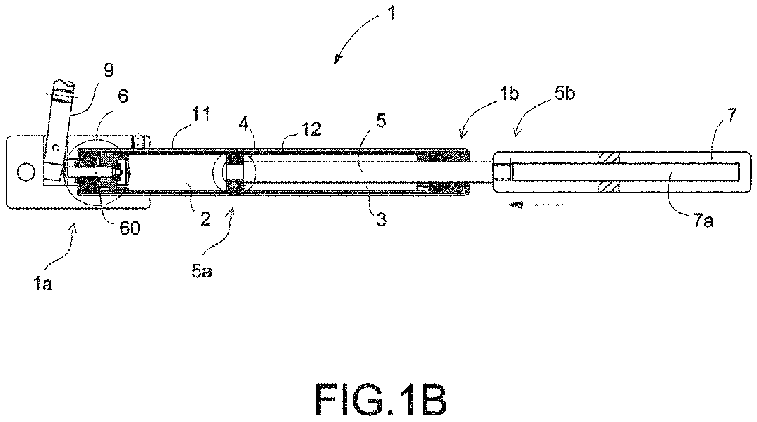

The invention relates to a locking gas spring (1) or self-locking gas spring (1) which, as with other locking gas springs, comprises a body with a concentric outer tube (11) and inner tube (12), inside which there are at least two chambers (2, 3) in which gas is stored as shown in Figures 1A and 1B. In the centre of the gas spring (1), separating the chambers (2, 3), is a piston assembly (4) connected substantially to proximal end (5a) of a axle (5) that protrudes out of the gas spring (1) at a distal end (1b). The axle (5) is able to move axially both in an expansive direction towards distal end (1b) and in a compressive direction towards a proximal end (1a) inside the inner tube (12) of the gas spring (1). The gas spring (1) further comprises a drive system (6) at the proximal end (1a) of the gas spring (1) that can be activated from the outside to allow the passage of gas between the chambers (2, 3) through at least one gas passage area (13, 20).

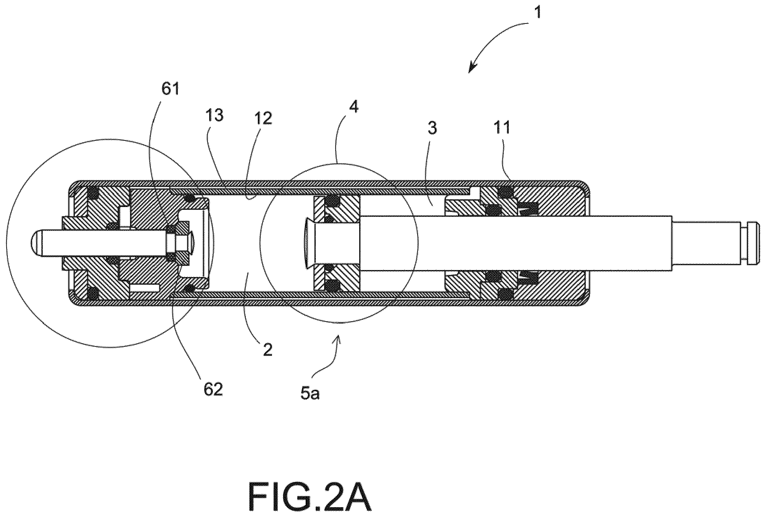

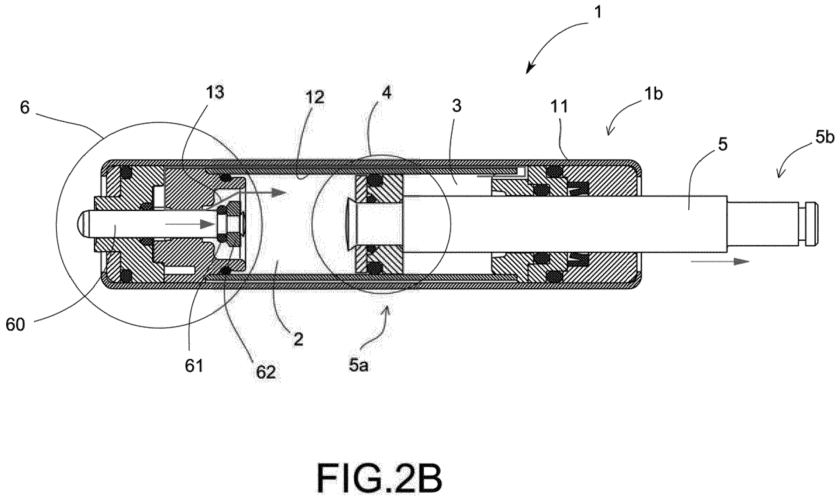

In a general, well-known way, in self-locking gas springs, when no external force acts on a gas spring, the piston assembly (4) separates both chambers (2, 3) in an air-tight way, leaving the gas spring locked. However, when the gas spring (1) is externally activated by the drive system (6), a release pin (60) moves a gasket (61) and a washer (62), opening the gas passage area (13) that allows the gas from the chamber (3) to pass to the chamber (2) between the tubes (11, 12) as shown in Figures 2A and 2B. This activation of the drive system (6) causes the piston assembly (4) to move towards the distal end (1b) of the spring (1), generating the expansion of the spring (1). Until now, it is known that in order to re-compress the gas spring (1) it was necessary to push the axle (5) while keeping the release pin (60) of the drive system (6) externally activated in order to pass the gas between the chambers (2, 3).

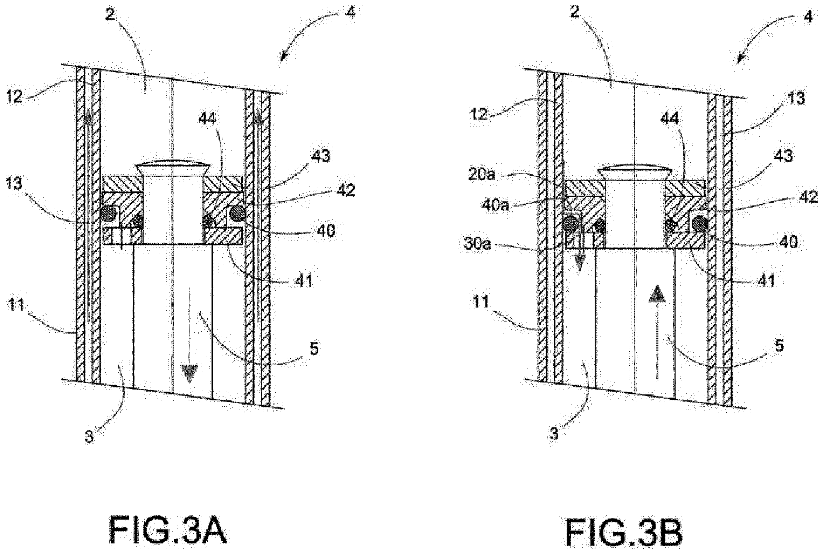

However, the gas spring (1) of the invention comprises a piston assembly (4) with at least one lower washer (41); a piston (42); an airtight seal (44) between the lower washer (41) and the piston (42) via the inside of the piston (42); and an upper washer (43). All the said elements of the piston assembly (4) are found around the proximal end (5a) of the axle (5) as shown in Figures 3A and 3B. In addition, the piston assembly (4) is characterized in that it comprises a floating seal (40) between the piston (42) and the lower washer (41) on the exterior of the piston (42) and in contact with the inner tube (12). In this way, the chambers (2, 3) are intermittently connected, depending on the expansion or compression movement of the axle (5).

In other words, as shown in Figures 3A and 3B, the connection between the chambers (2, 3) is impossible during the expansion of the gas spring (1) due to the friction of the floating seal (40) against the inner wall of the inner tube (12), which places it in contact with an upper area of the piston (42) closing the gas passage (20), leaving only the gas passage (13) between the tubes (11, 12) open. Then, during the compression of the gas spring (1), the floating seal (40) slides by friction against the inner wall of the inner tube (12) until it comes into contact with the lower washer (41), opening the gas passage (20). In this way, the chambers (2, 3) are connected without the need to actuate the drive system (6). During compression, the gas moves from one chamber (2) to the other chamber (3) through the gas passage (20), i.e. the gas passes through at least one initial slotted section (20a) between the upper washer (43) and the inner tube (12), then through a varying space (40a) and then through a hole (30a) in the lower washer (41) towards the distal end (1b) of the gas spring (1). Consequently, the axle (5) is moved simply by pushing towards the proximal end (1a) without the need to actuate externally the release pin (60).

Additionally, in alternative embodiments, the locking gas spring (1) comprises a slot or slotted hole (7) at the distal end (5b) of the axle (5) so that the gas spring (1) comprises two stages in expansion or compression. In other words, it comprises the path of the axle (5) and the slot path (7a) of the slot (7). On the one hand, when the axle (5) of the gas spring (1) reaches its maximum extension as seen in Figure 1A, the slot (7) allows an element attached to the gas spring (1) to slide along the slot path (7a). On the other hand, at the moment of compression, the gas spring (1) force will not oppose the first external force since the joined element must first go through the slot path (7a) of the slot (7). In this way, the gas spring (1) does not present resistance to compression, because once the slot (7) has been passed, the limit angle has been exceeded and the weight of the joined element exerts sufficient force, reducing the effort needed initially.

Optionally, the self-locking gas spring (1) could be activated externally by means of a drive mechanism (8) comprising a lever (9) that moves manually from left to right, where the manual movements cause the lever (9) to push the release pin (60) to actuate the self-locking gas spring (1) and starts the expansion of the axle (5) by means of the drive system (6).

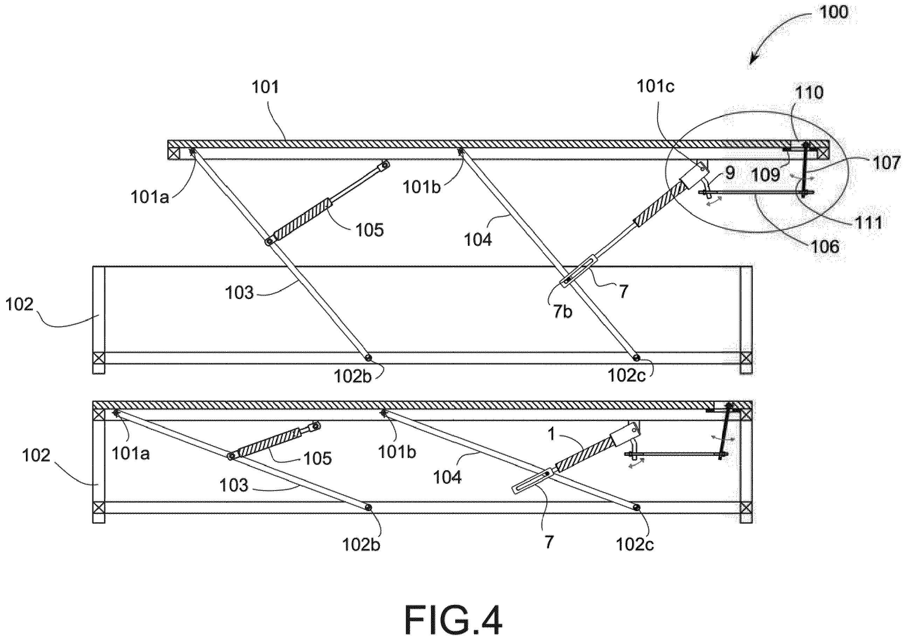

Also another object of the invention is a elevation system (100) of a mobile structure (101) attached to a base structure (102) by means of at least two connecting rod (103, 104) and at least one lifter (105), as it is shown in Figure 4. The connecting rod (103, 104) work together to raise and lower the mobile structure (101), where one of the connecting rod (103) joins a distal end (101a) of the mobile structure (101) with a midpoint (102b) of the base structure (102) and the other connecting rod (104) joins a midpoint (101b) of the mobile structure (101) with a proximal end (102c) of the base structure (102). The lifter (105) of the elevation system (100) of the invention joins one connecting rod (103) with the mobile structure (101) to facilitate the raising or lowering of the mobile structure (101). This type of elevation system (100) is known in lift-up beds or foldout sofa beds, for example, as a mobile part where the force required to raise the bed or open the couch is substantial. Another possible application of the elevation system (100) of the invention is in a hinge system.

Therefore, to facilitate and reduce the efforts of users or operators, the elevation system (100) of the invention is characterized in that it comprises a self-locking gas spring (1) connected to at least one connecting rod (103, 104) by means of a slot (7) at the distal end (5b) of the axle (5) and to the structure (101, 102) of the elevation system (100) by the proximal end (1a) of the gas spring (1).

In alternative embodiments, the self-locking gas spring (1) is connected to the connecting rod (103) or to the connecting rod (104) by the slot (7) and to the mobile structure (101) or to the base structure (102) by the proximal end (1a) of the gas spring (1).

As mentioned above, as a result of the slot (7), when the axle (5) of the self-locking gas spring (1) reaches its maximum extension, the slot (7) allows the point (7b) to slide through the slotted space (7a) until the lifter (105) reaches maximum expansion. At this point, the mobile structure (101) will be in the raised or open position.

When starting the descent of the mobile structure (101) from the raised or open position, as a result of the slot (7) the gas spring (1) does not interfere, that is, it does not add force to the lifter (105) nor does it exert resistance to the external thrust force. Therefore, the necessary force at the beginning of the descent or closing of the mobile structure (101) is minimized, since only the force of the lifters (105) must be overcome because the first movement of the gas spring (1) that acts in the descent or closure of the mobile structure (101) is the movement of the slot (7). When the point (7b) finishes moving along the slot path (7a), the mobile structure (101) will have lowered to a midpoint of its movement, where the movement of the axle (5) of the gas spring (1) begins, without the need to actuate the release pin (60) for compression as a result of the internal configuration explained above. The self-locking gas spring (1) will be compressed accompanying the mobile structure (101) until it lowers or reaches the base structure (102).

Additionally, as previously mentioned, the self-locking gas spring (1) may comprise a drive mechanism (8) which is external to the elevation system (100) and activates the drive-system (6) release pin (60) by means of a lever (9). However, in order to access the gas spring (1) activation when it is part of the elevation system (100), the drive mechanism (8) must include auxiliary elements for connection with the gas spring (1) that allow the user or operator to access the elevation system (100) from outside the mobile structure (101). For this reason, the drive mechanism (8) also comprises a bar (106) that connects the lever (9) of the self-locking gas spring (1) with the handle (107); a rotating shaft (108) on the handle (107); a plate (109) in the mobile structure (101); and a window (110) in the mobile structure (101) where a hand can be inserted to actuate the handle (107) and thereby move the bar (106) attached to the lever (9) that activates the release pin (60).

The activation of the elevation system (100) can be carried out on the lower or upper part of the mobile structure (101), depending on the location of the window (110). However, access to the lever (9) is best required to be as hidden as possible, so that only authorized personnel or users can access it.

In one embodiment, such as a lift-out bed, one of the possible ways to actuate the lever (9) is to insert your hand through the window (110) and actuate the handle (107) under the mattress, making the indicated movement at the arrow (111) in Figure 4. The handle (107) pivots at a point (108) hooked onto a plate (109) that is under the mattress cover or mobile structure (101) and transmits the movement to the bar (106). The bar (106) moves the lever (9) and in this way the release pin (60) in the drive system (6) of the gas spring (1) is activated, beginning to open the gas passage (13), which extends the axle (5) and thus begins to raise the mobile structure (101).

Thanks to the assembly of at least one lifter (105) and at least one self-locking gas spring (1) in the elevation system (100) of the invention, the force of the self-locking gas spring (1) is added to the expansion and force of the lifter (105), thus reducing the elevation effort of the mobile structure (101) or expansion of the elevation system (100) that must be applied to lift or open the mobile element (101). In addition, the slot (7) means that in the descent of the mobile structure (101) or compression of the system (100), the self-locking gas spring (1) does not exert any resistance at the beginning of the movement, which reduces the force necessary to compress the elevation system (100).

In conclusion, this solution of the self-locking gas spring (1) and/or the elevation system (100) with the self-locking gas spring (1), such as a elevation or folding bed or even a hinge, makes it possible to reduce the forces used in the raising and lowering of the mobile structure (101), offering light, comfortable movements for the expansion and compression of the elevation system (100) of the invention.

## Claims

1. Self-locking gas spring (1) comprising a body with an outer tube (11) and an inner tube (12), inside which there are two chambers (2, 3) in which gas is stored, these chambers (2, 3) being separated by a piston assembly (4) comprising at least one lower washer (41) and a piston (42) around a proximal end (5a) of a axle (5) connected substantially to the piston assembly (4), where the axle (5) protrudes towards the outside of the gas spring (1) and is able to move axially both in the expansive direction towards the outside of the gas spring (1) and in the compressive direction towards the inside of the gas spring (1), and where the gas spring (1) comprises a drive system (6) that can be actuated from the outside to allow the passage of gas between the chambers (2, 3) through at least one gas passage area (13), where;
- The piston assembly (4) comprises a floating seal (40) between the piston (42) and the lower washer (41), which connects the chambers (2, 3) by means of a gas passage (20) when the axle (5) is in compression and keeps them separated in an airtight way when the axle (5) is in expansion.

2. Self-locking gas spring (1) of claim 1, wherein the gas spring (1) comprises a slot (7) or slot element with a slotted space (7a) at the distal end (5b) of the axle (5).

3. Self-locking gas spring (1) of claim 1, wherein the gas spring (1) comprises an external drive mechanism (8) which comprises a lever (9) that moves manually from left to right, connected to the release pin (60) in the drive system (6).

4. Bed comprising a self-locking gas spring (1) of any of claims 1 to 3.

5. Hinge comprising a self-locking gas spring (1) of any of claims 1 to 3.

6. Elevation system (100) for a mobile structure (101) attached to a base structure (102) by means of at least two connecting rod (103, 104) and at least one lifter (105), where one of the connecting rods (103, 104) joins a distal end (101a) of the mobile structure (101) with a midpoint (102b) of the base structure (102) and the other connecting rod (103, 104) joins a midpoint (101b) of the mobile structure (101) with a proximal end (102c) of the base structure (102), and where the lifter (105) of the elevation system (100) of the invention joins at least one connecting rod (103, 104) with the mobile structure ( 101), where the elevation system (100) **characterized in that** it comprises:
- a self-locking gas spring (1) connected to at least one connecting rod (103, 104) by a distal end (5b) of the axle (5) and to the structure (101, 102) of the elevation system (100) by the proximal end (1a) of the gas spring (1), where the self-locking gas spring (1) comprises a slot (7) at the distal end (5b) of the axle (5) connected to at least one connecting rod (103, 104).

7. Elevation system (100) of claim 6, wherein the self-locking gas spring (1) is connected to the connecting rod (103) by means of the slot (7) and to the mobile structure (101) by means of the proximal end (1a) of the gas spring (1).

8. Elevation system (100) of claim 6, wherein the self-locking gas spring (1) is connected to the connecting rod (103) by means of the slot (7) and to the base structure (102) by means of the proximal end (1a) of the gas spring (1).

9. Elevation system (100) of claim 6, wherein the self-locking gas spring (1) is connected to the connecting rod (104) by means of the slot (7) and to the mobile structure (101) by means of the proximal end (1a) of the gas spring (1).

10. Elevation system (100) of claim 6, wherein the locking gas spring (1) is connected to the connecting rod (104) by means of the slot (7) and to the base structure (102) by means of the proximal end (1a) of the gas spring (1).

11. Elevation system (100) of claim 6, wherein the elevation system (100) comprises a drive mechanism (8) which is external to the elevation system (100), and comprises auxiliary elements such as a bar (106) that joins the lever (9) of the self-locking gas spring (1) to the handle (107), a rotating shaft (108) on the handle (107), a plate (109) on the mobile structure (101) and a window (110) on the mobile structure (101) where the hand can be inserted to actuate said handle (107) and thereby move said bar (106) attached to said lever (9) that activates a release pin (60) in the drive system (6) of the gas spring (1).

12. Elevation system (100) of claim 6, wherein the elevation system (100) comprises a drive mechanism (8) external to the elevation system (100), which comprises auxiliary elements such as a bar (106) that joins the lever (9) of the self-locking gas spring (1) to a handle (107); a rotating shaft (108) on said handle (107); a plate (109) on the base structure (102); and a window (110) on said structure base (102) where the hand can be inserted to actuate said handle (107) and thereby move said bar (106) attached to said lever (9) to activate a release pin (60) in the drive system (6) of the gas spring (1).
